# EUROPÄISCHE PATENTSCHRIFT

(11) **EP 1 549 538 B1**
(45) Veröffentlichungstag und Bekanntmachung des Hinweises auf die Patenterteilung: **07.04.2010**
(21) Anmeldenummer: 03750377.8
(22) Anmeldetag: 29.09.2003
(51) Int. Cl.: B60T 8/36, F16F 1/44

(54) **VORRICHTUNG ZUR SCHWINGUNGSDÄMPFENDEN ANORDNUNG EINES AGGREGATS UND MIT DERARTIGEN VORRICHTUNGEN AUSGESTATTETES AGGREGAT**
DEVICE FOR VIBRATION-DAMPING ARRANGEMENT OF A UNIT AND UNIT EQUIPPED WITH SAID DEVICES
DISPOSITIF POUR L'AGENCEMENT AMORTISSANT LES VIBRATIONS D'UNE UNITE ET UNITE EQUIPEE DE TELS DISPOSITIFS

(30) Priorität: 01.10.2002 DE 10245797
(43) Veröffentlichungstag der Anmeldung: 06.07.2005
(73) Patentinhaber: ROBERT BOSCH GMBH, 70442 Stuttgart (DE)
(72) Erfinder: WEH, Andreas, 87471 Durach (DE); SCHLITZKUS, Michael, 87463 Dietmannsried (DE); MAYR, Matthias, 87549 Rettenberg (DE)
(86) Internationale Anmeldenummer: PCT/DE2003/003231
(87) Internationale Veröffentlichungsnummer: WO 2004/031012

(56) Entgegenhaltungen:
- EP-A- 1 219 536
- WO-A-02/10610
- US-A- 1 864 080
- US-A- 4 375 933
- US-A- 4 890 966
- US-A- 5 156 371
- US-A- 6 098 949

## Beschreibung

### Stand der Technik

Die Erfindung geht aus von einer Vorrichtung entsprechend der Gattung des Anspruchs 1 beziehungsweise einem mit derartigen Vorrichtungen ausgestatteten Aggregat entsprechend der Gattung des Anspruchs 8.

Eine gattungsgemäße Vorrichtung ist beispielsweise in der US-A-1864 080 offenbart. Diese bekannte Vorrichtung umfasst ein Gehäuse, einen im Gehäuse aufgenommenen Dämpfungskörper aus schwingungsdämpfendem Material und einen im Dämpfungskörper gelagerten Kern. Am Gehäuse ist ein konventionelles, erstes Befestigungsmittel in Form einer Gewindespindel angebracht. Ein zweites Befestigungsmittel weist in die dem ersten Befestigungsmittel entgegen gesetzte Raumrichtung, ist am Kern ausgebildet und ist ebenfalls als Gewindespindel ausgeführt.

Vorrichtungen zur schwingungsdämpfenden Anordnung eines Aggregats in Form eines Außenbordmotors sind ferner aus der EP-A-1 219 536 A1 bereits bekannt Auch diese Vorrichtungen haben ein Gehäuse mit einem darin angeordneten Dämpfungskörper und einen im Dämpfungskörper gelagerten Kern. Der Kern ist beispielsweise mit einem Innengewinde versehen und mittels einer konventionellen Schraube mit einem Flansch verschraubt

Weiterhin sind Vorrichtungen zur schwingungsdämpfenden Anordnung eines Hydraulischen Aggregats einer Fahrzeugbremsanlage in der WO 02/10610 A1 erläutert Diese Vorrichtungen bestehen aus einem elastischen Dämpfungskörper, der allerdings ohne eigenes Gehäuse auskommt Der Dämpfungskörper wird von einem Kern durchdrungen, an dessen einem Ende eine Schraubmutter auf einen Gewindeabschnitt aufgeschraubt ist

Bei der Vorrichtung nach der US-A-5 156 371 ist der im Dämpfungskörper gelagerte Kern an seinem aus der Vorrichtung vorstehenden Ende ebenfalls mit einem Schraubgewinde versehen. Über dieses Schraubgewinde ist der Kern an einer Flanschfläche verankerbar.

Aus der DE 39 41 401 C1 ist ebenfalls eine Vorrichtung bekannt, mit der ein Hydraulikaggregat eines Antiblockierschutz-Bremssystems an einer karosserieseitigen Konsole schwingungsgedämpft gelagert ist. Die Verbindung zwischen der Vorrichtung und der Konsole ist ebenfalls als Schraubverbindung ausgeführt

Schraub- bzw. Gewindeverbindungen zwischen Bauteilen erfordern Werkzeug zum Aufbringen eines Anzugsdrehmoments. Die einzelnen Elemente einer Schraubverbindung sind aufwändig durch spanabhebende Arbeitsgänge herzustellen, sind dementsprechend teuer und zudem schwierig in der Handhabung. Des Weiteren kann sich das ursprünglich aufgebrachte Anzugsdrehmoment unter Betriebsbedingungen beispielsweise durch Temperaturschwankungen, Erschütterungen oder Schwingungen, abbauen, was unter Umständen eine unerwünschte Lockerung der Schraubverbindung bewirken kann.

Schließlich offenbart die US-A-4 375 933 eine sogenannte Clip-Gewindebuchse. Dabei ist eine konventionelle Gewindebuchse an einem Federende einer zu einer Schlaufe gebogenen Bügelfeder befestigt. Durch Einschieben einer Blechplatine zwischen beide Federenden lässt sich die Gewindebuchse an der Blechplatine kraft- und formschlüssig verankern. Allerdings erfordert das Auseinanderspreizen der Federenden beim Einschieben der Blechplatine aufgrund einer bestehenden Vorspannung zwischen diesen Federenden relativ viel Kraft.

### Vorteile der Erfindung

Die erfindungsgemäße Vorrichtung weist gemäß den kennzeichnenden Merkmalen des Anspruchs 1 ein Befestigungsmittel auf, das eine zu einer Schleife gebogene Bügelfeder und einen zwischen den Federenden verschiebbar angeordneten und unverlierbar gehaltenen Spreizkörper umfasst. Ein derartiges Befestigungsmittel ermöglicht eine dauerhafte Fixierung eines Aggregats an einer Anbaufläche ohne allzu großen physischen Kraftaufwand von Hand und insbesondere ohne Werkzeugeinsatz. Dabei fallen keine zu entsorgenden, überschüssigen Bauteile an. Weitere Vorteile, oder vorteilhafte Weiterbildungen der Erfindung ergeben sich aus den Unteransprüchen oder der nachfolgenden Beschreibung.
)

### Zeichnungen

Die Erfindung ist in der Zeichnung dargestellt und in der nachfolgenden Beschreibung näher erläutert.

Es zeigen:
Figur 1 in einer perspektivischen Darstellung ein Hydraulikaggregat eines Antiblockierschutzbremssystems, welches über erfindungsgemäße Vorrichtungen an einer fahrzeugseitigen Konsole befestigt ist,
Figur 2 ein erstes Ausführungsbeispiel einer nicht erfindungsgemäßen Vorrichtung im Längsschnitt,
Figur 3 ebenfalls einen Längsschnitt durch ein nicht erfindungsgemäßes Ausführungsbeispiel der Erfindung,
Figur 4 wiederum im Längsschnitt, ein erfindungsgemäßes Ausführungsbeispiel der Erfindung und
Figur 5 eine besonders vorteilhafte Weiterbildung der Erfindung.

### Beschreibung der Ausführungsbeispiele

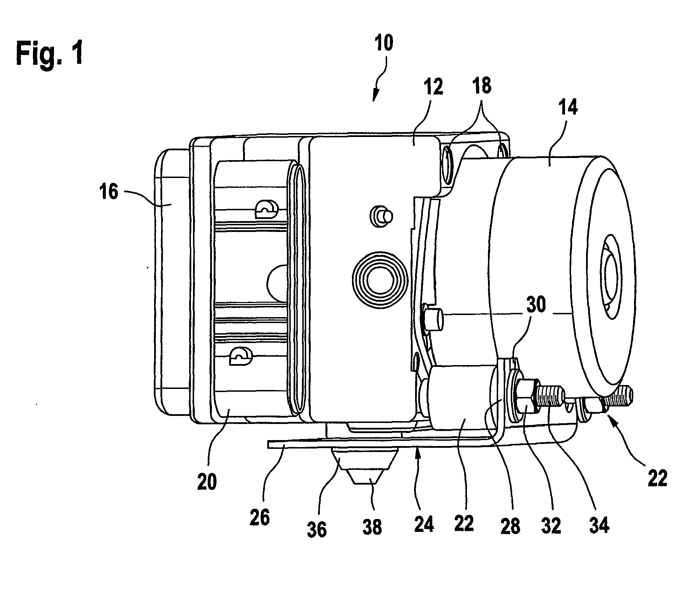

Figur 1 zeigt in perspektivischer Ansicht ein Hydraulikaggregat 10 eines Antiblockierschutzbremssystems. Dieses weist einen Gehäuseblock 12, einen an einer Stirnseite dieses Gehäuseblocks 12 angeschraubten Elektromotor 14 und dazu gegenüberliegend ein elektronisches Steuergerät 16 auf. Der Elektromotor 14 treibt über einen im Inneren des Gehäuses 40 gelagerten und in Figur 1 nicht sichtbaren Antrieb ebenfalls nicht erkennbare Pumpenelemente an, welche in einem hydraulischen Druckmittelkreis einen Druck aufbauen. Das Druckmittel wird über einen Hauptbremszylinder und einen daran angeschlossenen Druckmittelvorratsbehälter dem Hydraulikaggregat 10 bereitgestellt. Hierzu dienen die hydraulischen Anschlüsse 18. Das Steuergerät 16 ist über einen Gerätestecker 20 elektrisch kontaktierbar und dient der Ansteuerung von ebenfalls nicht sichtbaren Hydraulikventilen, die im Gehäuseblock 12 angeordnet sind. Diese Hydraulikventile steuern Druckmittelverbindungen zwischen Kanälen innerhalb des Gehäuseblocks 12. An diese Kanäle sind über Bremsleitungen Radbremszylinder anschließbar. Die hierzu erforderlichen hydraulischen Anschlüsse des Hydraulikaggregats 10 sind ebenfalls am Gehäuseblock 12 vorgesehen, sind aber in Figur 1 auch nicht erkennbar. Aufgrund des Betriebs der Pumpenelemente und der Regelvorgänge der Hydraulikventile kann es zu Druckschwingungen im Hydraulikaggregat 10 kommen, die über die Befestigung des Hydraulikaggregats 10 auf die Karosserie eines Fahrzeugs übertragen und von den Fahrzeuginsassen als störend wahrgenommen werden können.

Um eine Übertragung dieser Druckschwingungen auf die Fahrzeugkarosserie zu dämpfen, ist das Hydraulikaggregat 10 nach Figur 1 über erfindungsgemäße Dämpfungsvorrichtungen 22 an einer Konsole 24 befestigt, wobei davon auszugehen ist, dass diese Konsole 24 fahrzeugseitig verankert ist. Insgesamt sind zwei Dämpfungsvorrichtungen 22 vorhanden, die gemeinsam an der Außenseite des Hydraulikaggregats 10 fixiert sind, an der auch der Elektromotor 14 angeordnet ist. Die karosserieseitige Konsole 24 ist als Winkelkonsole 24 ausgeführt und weist eine, in geringem Abstand zu der, den Anschlüssen 18 gegenüberliegenden Unterseite des Gehäuseblocks 12 des Hydraulikaggregats 10 angeordnete Grundplatte 26 und im Wesentlichen senkrecht in Richtung des Elektromotors 14 abgewinkelte Halter 28 auf. Die Halter 28 bilden Aufnahmen für die Dämpfungsvorrichtungen 22 aus, sind zu beiden Seiten des Elektromotors 14 angeordnet und erstrecken sich von der Grundplatte 24 aus bis auf eine Höhe kurz unterhalb der Mittelachse des Elektromotors 14. Die Halter 28 haben zwei nach oben offene Längsschlitze 30, in die ein von der Dämpfungsvorrichtung 22 abstehender und mit einer Mutter 32 ausgestatteter Gewindestift 34 eingelegt ist. Mittels dieser Mutter 32 lassen sich die Dämpfungsvorrichtung 22 und die Konsole 24 miteinander verschrauben. Das dem Gewindestift 34 gegenüber liegende Ende der erfindungsgemäßen Dämpfungsvorrichtung 22 ist mit dem Gehäuseblock 12 des Hydraulikaggregats 10 verbunden, vorzugsweise eingepresst. Darüber hinaus ist an der Grundplatte 26 der Konsole 24 im Bereich unterhalb des Gehäuseblocks 12 ein Abstützelement 36 aus schwingungsdämpfendem Material verankert. Dieses Abstützelement 36 ist ringförmig ausgeführt, weist eine nicht erkennbare, nach außen offene, umlaufende Ringnut auf, über die es in einer entsprechend bemaßten Ausnehmung der Grundplatte 26 festgelegt ist. Das Hydraulikaggregat 10 liegt auf dem aus der Ausnehmung vorstehenden und dem Gehäuseblock 12 zugewandten Abschnitt des Abstützelements 36 auf und ist zur Ausbildung einer schwimmenden Lagerung mit einem vorstehenden und das Abstützelement 36 durchdringenden Dorn 38 versehen.

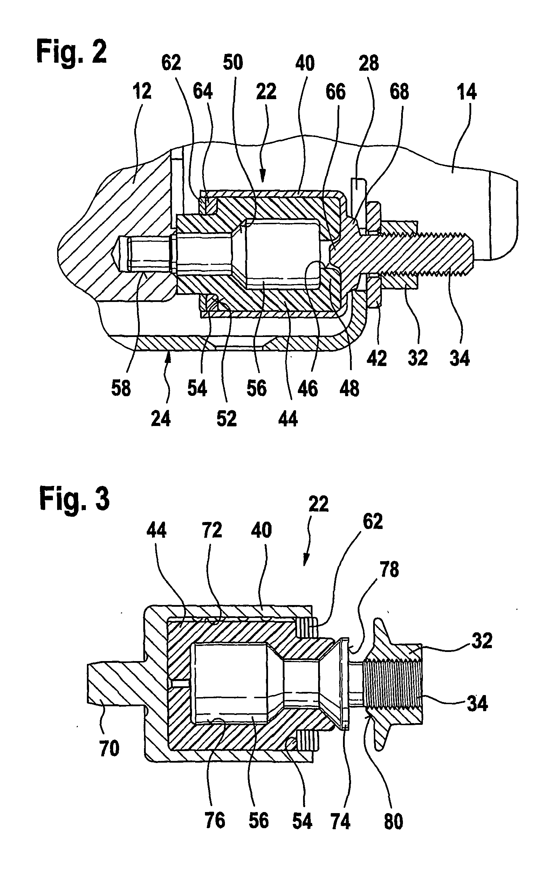

In Figur 2 ist eine nicht erfindungsgemäße Dämpfungsvorrichtung 22 in einer möglichen Ausführungsform im Längsschnitt dargestellt. Diese Dämpfungsvorrichtung 22 besteht aus einem im wesentlichen glockenförmigen Gehäuse 40, welches vorzugsweise aus Metall hergestellt ist. Vom geschlossenen Ende des Gehäuses 40 steht koaxial zu dessen Längsachse der Gewindestift 34 ab, auf dem die Mutter 32 aufgeschraubt ist. Mit der Mutter 32 wirkt eine Unterlagscheibe 42 zusammen. Im Inneren des Gehäuses 40 der Dämpfungsvorrichtung 22 ist ein Dämpfungskörper 44 aus schwingungsdämpfendem Material, beispielsweise aus Elastomer, aufgenommen. Dieser Dämpfungskörper 44 ist, abgesehen von einer Ausnehmung in seinem Boden, topfförmig ausgebildet. Sein geschlossenes Ende liegt am geschlossenen Ende des Gehäuses 40 an. Zudem ist der Dämpfungskörper 44 sowohl in seinem Außen- als auch in seinem Innendurchmesser einmal abgesetzt, wobei der Absatz am Innendurchmessers als Konus ausgeführt ist, während der des Außendurchmessers rechtwinklig ausgeführt ist. Außen am Dämpfungskörper 44 ergibt sich dadurch eine senkrechte Schulter 54. Im Inneren des Dämpfungskörpers 44 ist ein starrer Kern 56 zylindrischen Querschnitts aufgenommen, dessen Kontur auf die Innenkontur des Dämpfungskörpers 44 abgestimmt ist. Dementsprechend gliedert sich der Kern 56 in einen, in seinem Außendurchmesser größeren und einen, im Außendurchmesser kleineren Abschnitt, wobei der Übergang zwischen beiden Abschnitten ebenfalls konisch ausgeführt ist. Der im Außendurchmesser größere Abschnitt befindet sich auf der dem geschlossenen Ende des Gehäuses 40 zugewandten Seite, während der im Durchmesser kleinere Abschnitt axial aus dem offenen Ende des Gehäuses 40 vorsteht und mit einem Teil dieses vorstehenden Abschnitts in eine dafür vorgesehene, sacklochförmige Aufnahmebohrung 58 im Gehäuseblock 12 des Hydraulikaggregats 10 eingepresst ist. Das Einpressmaß wird unter anderem bestimmt von der Länge eines ebenfalls über das Gehäuse 40 der Dämpfungsvorrichtung 22 vorstehenden Teilbereichs des Dämpfungskörpers 44 mit zurück genommenem Außendurchmesser. Das Gehäuse 40 der Dämpfungsvorrichtung 22 ist an seinem offenen Ende durch einen Verschluss 60, exemplarisch in Form einer in das Innere des Gehäuses 40 eingepressten Ringscheibe 62 mit daran anliegender Stützscheibe 64 verschlossen. Auf die Stützscheibe 64 kann gegebenenfalls verzichtet werden; alternativ kann der Verschluss 60 auch als Bördelung des Gehäuses 40 ausgebildet sein. Im vorliegenden Ausführungsbeispiel gemäß Figur 2 ist der Verschluss 60 so weit innerhalb des Gehäuses 40 befestigt, dass seine innen liegende Stirnfläche an der Schulter 54 des Dämpfungskörpers 44 anliegt. Aufgrund dieser Verhältnisse sind die Bauelemente Gehäuse 40, Dämpfungskörper 44 und Kern 56 formschlüssig zu einer Baueinheit verbunden. Damit lassen sich sowohl Zug- wie auch Druckkräfte von einer einzelnen Dämpfungsvorrichtung 22 gleichermaßen aufnehmen. Der Boden des Gehäuses 40 ist in seinem Zentrum mit einer Verdickung 66 versehenen ist, welche in Richtung des Gehäuseinneren als zapfenförmiger Vorsprung 68 ausgebildet ist. Dieser Vorsprung 68 greift in eine Ausnehmung im Boden des Dämpfungskörpers 44 ein und stellt dadurch eine Zentrierung zwischen dem Gehäuse 40 und dem Dämpfungskörper 44 her. Beim Einpressen der erfindungsgemäßen Dämpfungsvorrichtung 22 in die Aufnahmebohrung 58 des Gehäuseblocks 12 des Hydraulikaggregats 10 wird die Einpresskraft über das Gehäuse 40 auf den Kern 56 übertragen, wobei sich der Dämpfungskörper 44 so weit elastisch verformt, bis das zwischen dem Vorsprung 68 im Boden des Gehäuses 40 und dem Kern 56 vorhandene Spiel aufgebraucht ist und der Vorsprung 68 direkt am Kern 56 anliegt. Das vorhandene Spiel ist derart gewählt, dass der Dämpfungskörper 44 durch den Einpressvorgang keinen Schaden nimmt. Auf der von diesem Vorsprung 68 abgewandten Seite bildet die Verdickung 66 des Gehäusebodens einen Konus. Darüber wird eine Zentrierung der Dämpfungsvorrichtung 22 im Längsschlitz 30 der Konsole 24 gemäß Figur 1 bewirkt, sobald über die Mutter 32 das Hydraulikaggregat 10 mit dieser Konsole 24 verschraubt wird.

Figur 3 zeigt ebenfalls im Längsschnitt eine Weiterbildung einer nicht erfindungsgemäßen Dämpfungsvorrichtung 22. Auch diese weitergebildete Dämpfungsvorrichtung 22 besteht aus einem glockenförmigen Gehäuse 40, einem darin angeordneten Dämpfungskörper 44 und einem vom Dämpfungskörper 44 aufgenommenen Kern 56. Die jeweiligen Befestigungsmittel 82 sind wiederum dem Gehäuse 40 und am Kern 56 zugeordnet, wobei im Unterscheid zum Ausführungsbeispiel nach Figur 2 der Stift 70 nunmehr am Gehäuse 40 und der Gewindestift 34 nunmehr am Kern 56 angeordnet sind. Durch diese Umkehrung in der Anordnung der Befestigungsmittel 82 lässt sich die zum Einpressen der Dämpfungsvorrichtung 22 notwendige Einpresskraft direkt über das Gehäuse 40 auf den vorstehenden Stift 70 übertragen, so dass keine Deformation des Dämpfungskörpers 44 stattfindet. Beschädigungen am Dämpfungskörper 44 sind dadurch ausgeschlossen. Weitere Unterschiede gegenüber dem Ausführungsbeispiel nach Figur 2 bestehen bei dieser Dämpfungsvorrichtung 22 darin, dass das Gehäuse 40 auf seiner dem Dämpfungskörper 44 zugewandten Innenwandung mit einer Oberflächenstruktur 72, beispielsweise einem Rändel, versehen ist. Ebenso, beziehungsweise alternativ können der Kern 56 und/oder der Dämpfungskörper (44) selbst auf ihren einander zugewandten Umfangsflächen mit einer beliebigen Oberflächenstruktur 72 versehen sein. Durch diese Maßnahmen wird der Formschluss zwischen dem Kern 56, dem Dämpfungskörper 44 und dem Gehäuse 40 verbessert, wodurch das Drehmoment zwischen Mutter 32 und Gewindestift 34 erhöht werden kann, ohne dass zwischen diesen Bauteilen eine Relativbewegung stattfindet. Dadurch kann als Mutter 32 auch eine an sich allgemein bekannte, selbstsichernde Mutter eingesetzt werden, die aufgrund ihres höheren Anzugsdrehmoments eine zusätzliche Sicherheit gegenüber selbsttätigem Lösen gewährleistet. Weiterhin unterschiedlich ist, dass der Kern 56 an seinem der Mutter 32 zugewandten Seite mit einer zweiten Durchmessererweiterung 74 versehen ist, welche in Richtung der Längsachse zur ersten Durchmessererweiterung 76 beabstandet ist. Die zweite Durchmessererweiterung 74 ist auf ihrer, der ersten Durchmessererweiterung 76 zugewandten Seite ebenfalls konisch angeschrägt, auf ihrer davon aufgewandten Seite aber rechtwinklig abgesetzt. Eine sich dadurch ergebende Schulter 78 liegt im montierten Zustand des Hydraulikaggregats 10 auf der von der Mutter 32 abgewandten Seite am Halter 28 flächig an. Zur Zentrierung der Dämpfungsvorrichtung 22 am Längsschlitz 30 des Halters 28 (Figur 1) dient nunmehr ein an der Mutter 32 halterseitig angebrachter Zentrierkonus 80. Das Gehäuse 40 der Dämpfungsvorrichtung 22 weist einen Boden ohne Verdickung 66 auf und kann dadurch preisgünstiger als im Ausführungsbeispiel nach Figur 2 hergestellt werden.

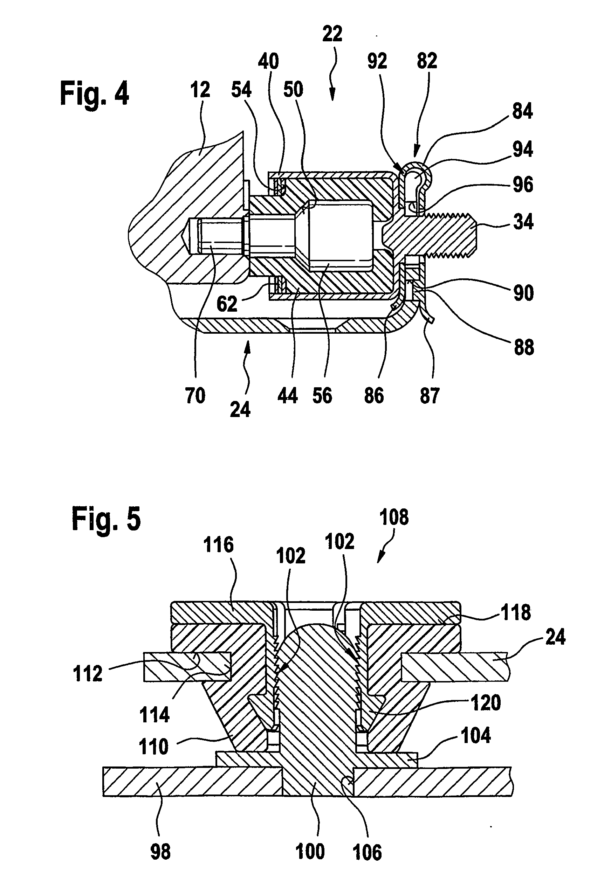

Das Ausführungsbeispiel nach Figur 4 zeigt eine besonders vorteilhafte Ausbildung für das mit dem Halter 28 der Konsole 24 zusammen wirkende Befestigungsmittel 82. Dieses Befestigungsmittel 82 erlaubt eine Verankerung des Hydraulikaggregats 10 an der Konsole 24 durch Formschluss, ohne den Einsatz von Werkzeug. Der Montagevorgang des Hydraulikaggregats 10 im Fahrzeug wird dadurch nochmals vereinfacht. Hierfür ist anstelle der in den zuvor beschriebenen Ausführungsbeispielen verwendeten Mutter 32 eine Bügelfeder 84 vorgesehen, bei der es sich um ein zu einer offenen Schlaufe gebogenes Federelement mit zwei gegeneinander vorspannbaren Federnenden 86, 87 handelt. Das dem Hydraulikaggregat 10 zugewandte Federende 86 ist am Gehäuse 40 der Dämpfungsvorrichtung 22 verankert, während das davon abgewandte zweite Federende 87 gegenüber diesem ersten Federende 86 relativbeweglich ist. Dieses relativbewegliche Federende 87 ist im Bereich seines offenen Endes auf der Innenseite mit einer vorstehenden Fixiernase 88 versehen, welche im montierten Zustand des Hydraulikaggregats 10 in eine entsprechende Ausnehmung im Halter 28 der Konsole 24 eingreift. Zur Montage des Hydraulikaggregats 10 an der Konsole 24 wird deren Halter 28 zwischen die beiden Federenden 86 eingeschoben, bis die Fixiernase 88 eingerastet. Um das Einführen des Halters 28 zwischen die Federenden 86 überhaupt zu ermöglichen, sind diese Federenden 86, 87 der Bügelfeder 84 in ihrem nicht montierten Zustand durch ein längliches Spreizelement 92 gespreizt. Das Spreizmaß wird vom verdickten Kopf 94 des Spreizelements 92 bestimmt, welcher dem geschlossenen Ende der Bügelfeder 84 zugewandt ist und etwas größer bemessen ist, als die Materialstärke des Halters 28. Mit der Einführung des Halters 28 in das offenen Ende der Bügelfeder 84 wird das Spreizelement 92 zwischen den beiden Federenden 86 in Richtung des geschlossenen Endes der Bügelfeder 84 hinein verschoben, bis schließlich der Kopf 94 des Spreizelements 92 in den Bereich des Biegeradiuses der Bügelfeder 84 gelangt. Dieser Biegeradius nimmt den Kopf 94 des Spreizelements 92 vollständig auf, so dass das Befestigungsmittel 84 zuschnappt. Sowohl das Spreizelement 92, wie auch die beiden Federenden 86 und 87 der Bügelfeder 84 sind mit durchgehenden, länglichen Ausnehmungen 96 versehen. Durch diese Ausnehmungen ragt der am Gehäuse 40 der Dämpfungsvorrichtung 22 ausgebildete Stift 34 hindurch, so dass das Spreizelement 92 auch nach der Befestigung des Hydraulikaggregats 10 an der Konsole 24 unverlierbar gehalten ist. Der Stift 34 des vorliegenden Ausführungsbeispiels ist exemplarisch als Gewindestift ausgeführt, was den verschiedenen Fahrzeugherstellern neben der beschriebenen reinen formschlüssigen Befestigungsmöglichkeit, auch eine rein kraftschlüssige Befestigungsmöglichkeit mit Hilfe einer auf den Gewindestift aufgeschraubten Mutter 32, als auch eine Kombination beider Befestigungsmöglichkeiten eröffnet.

Eine weitere Verankerungsmöglichkeit für ein Hydraulikaggregat 10 an der Karosserie eines Kraftfahrzeugs ist in Figur 5 dargestellt. Diese Figur 5 zeigt eine Ankerplatte 98 mit einem exemplarisch daran fixierten, senkrecht abstehenden Stehbolzen 100. Letzterer weist einen zylindrischen Querschnitt auf, hat einen kuppelartig abgerundetes freies Ende und ist entlang seines Umfangs mit mehreren axial beabstandeten, umlaufenden Rasthaken 102 konischer Gestalt versehen. Mit einem angeformten Ringbund 104 im Bereich des dem kuppelartigen Ende gegenüber liegenden zweiten Endes stützt sich der Stehbolzen 100 an der Ankerplatte 98 ab. Die Ankerplatte 98 ist mit Ausnehmungen 106 versehen, in die die Stehbolzen 100 abschnittsweise eingesetzt sind. Die derart ausgebildete Ankerplatte 98 ist vom Fahrzeughersteller am vorgesehenen Anbauort des Hydraulikaggregats 10 angebracht, wobei davon auszugehen ist, dass das in Figur 5 explizit nicht dargestellte Hydraulikaggregat 10 mittels den zuvor beschriebenen Dämpfungsvorrichtungen 22 an der Konsole 24 befestigt ist. Letztere ist in Figur 5 nur ausschnittsweiße dargestellt und ist mit Rastelementen 108 bestückt, welche mit den Stehbolzen 100 zusammen wirken. Diese Rastelemente 108 bestehen aus einem Dämpfungsring 110 aus schwingungsdämpfendem Material, beispielsweise aus Elastomer und weisen eine umlaufende, nach außen offene Ringnut 112 auf. Die Ringnut 112 ist bezüglich ihrer Nutbreite auf die Wandstärke der Konsole 24 abgestimmt, ferner entspricht der Nutgrund im wesentlichen dem Durchmesser einer durchgehenden Ausnehmung in der Konsole 24, so dass die Dämpfungsringe 110 über diese Ringnut 112 in der Ausnehmung sowohl radial wie auch axial festlegbar sind. In die Öffnung eines Dämpfungsrings 110 ist darüber hinaus eine Haltebuchse 116 eingesetzt. Die Haltebuchse 116 hat an einem ihrer Enden einen umlaufenden Bund 118, welcher flächig an einer Stirnfläche des Dämpfungsrings 110 anliegt. An das dem Bund 118 gegenüberliegende Ende der Haltebuchse 116 ist ein entgegen der Montagerichtung konisch ausgeführter, radial nach außen abstehender Rasthaken 120 angeformt, welcher in eine entsprechende Hinterschneidung auf der Innenseite des Dämpfungsrings 110 eingreift. Die Haltebuchse 116 ist gegenüber dem Dämpfungsring 110 ein verhältnismäßig starres Bauteil, so dass nach deren Montage in diesen Dämpfungsring 110 das Rastelement 108 zuverlässig an der Konsole 24 verankert ist. Zudem ist die Haltebuchse 116 auf ihrer Innenseite ebenfalls mit axial aufeinander folgenden, jedoch entgegengesetzt zu den Rasthaken 102 der Stehbolzen 100 ausgerichteten Rasthaken 102 identischer Geometrie versehen. Stehbolzen 100 und Rastelemente 108 lassen sich dadurch mit relativ geringer und in Längsrichtung der Stehbolzen 100 wirkender Kraft zusammen stecken und gegeneinander fixieren. Sie ermöglichen dadurch einen zuverlässigen Formschluss zwischen der mit dem Hydraulikaggregat 10 bestückten Konsole 24 und der fahrzeugseitig angebrachten Ankerplatte 98. In der Endlage der beschriebenen Steckverbindung liegt der Dämpfungsring 110 mit seinem, dem Anschlag 118 gegenüberliegenden Ende am Ringbund 104 der Stehbolzen 100 an. Aufgrund der erfindungsgemäßen Dämpfungsvorrichtung 22 mit ihrem Dämpfungskörper 44 und dem Dämpfungsring 110 im Rastelement 108 ist das Hydraulikaggregat 10 schwingungstechnisch von der Karosserie eines Kraftfahrzeugs wirksam entkoppelt. Eventuelle Schwingungen, hervorgerufen durch eine Betätigung der Pumpenelemente und/oder der Ansteuerung der Magnetventile des Hydraulikaggregats 10 werden dadurch wirksam gedämpft und sind von den Fahrzeuginsassen kaum mehr als Betriebsgeräusch wahrnehmbar. Zur Demontage des Hydraulikaggregats 10, beispielsweise im Servicefall, wird die Verbindung zwischen den zuvor beschriebenen, am Hydraulikaggregat 10 festgelegten Dämpfungsvorrichtungen 22 und der Konsole 24 gelöst.

Selbstverständlich sind Änderungen oder Ergänzungen an den beschriebenen Ausführungsbeispielen möglich, ohne vom Grundgedanken der Erfindung abzuweichen. Diesbezüglich anzumerken ist, dass der Dämpfungskörper 44 der Dämpfungsvorrichtung 22 zur besseren Montierbarkeit des starren Kerns 56 entlang seiner Längsrichtung auch geschlitzt ausgeführt werden kann.

## Patentansprüche

1. Vorrichtung (22) zur schwingungsdämpfenden Anordnung eines Aggregats (10), insbesondere eines Hydraulikaggregats eines Bremssystems, an einer Anbaufläche, insbesondere einer Karosserie eines Kraftfahrzeugs,
mit einem im wesentlichen glockenförmigen Gehäuse (40),
einem im Inneren des Gehäuses (40) angeordneten Dämpfungskörper (44) aus schwingungsdämpfendem Material,
einem im Dämpfungskörper (44) gelagerten Kern (56) und
mit dem Kern (56) und dem Gehäuse (40) zugeordneten Befestigungsmitteln (82),
wobei der Dämpfungskörper (44) im wesentlichen topfförmig ausgebildet ist und eine im Außendurchmesser sowie im Innendurchmesser wenigstens einmal abgesetzte Kontur aufweist,
wobei das im wesentlichen geschlossene Ende des Dämpfungskörpers (44) am geschlossenen Ende des Gehäuses (40) anliegt,
wobei der Kern (56) auf die Kontur des Dämpfungskörpers (44) abgestimmt, ebenfalls wenigstens einmal im Außendurchmesser abgesetzt ist,
wobei das im Außendurchmesser größere Ende des Kerns (56) dem geschlossenen Ende des Gehäuses (40) zugewandt ist, und
wobei das Gehäuse (40) auf seiner offenen Seite mit einem
Verschluss (60) versehen ist, an dem eine durch die abgesetzte Kontur des Dämpfungskörpers (44) sich ergebende Schulter (54) anliegt,
**dadurch gekennzeichnet,**
**dass** das zur Verankerung des Aggregats (10) an der Anbaufläche vorgesehene zweite Befestigungsmittel (82) der Vorrichtung (22) eine zu einer offenen Schlaufe gebogene Bügelfeder (84) mit zwei gegeneinander vorspannbaren Federenden (86, 87) ist,
wobei eines der Federenden (86) an der Vorrichtung (22) verankert ist und das zweite Federende (87) gegenüber diesem ersten Federende (86) relativ beweglich ist und
wobei zwischen den beiden Federenden (86, 87) ein unverlierbar an der Vorrichtung (22) gehaltener Spreizkörper (92) verschiebbar angeordnet ist,
welcher in seiner Grundposition die Federenden (86, 87) spreizt.

2. Vorrichtung nach Anspruch 1, **dadurch gekennzeichnet, dass** der Verschluss (60) durch eine Bördelung des Gehäuses (40) gebildet ist.

3. Vorrichtung nach Anspruch 1, **dadurch gekennzeichnet, dass** der Verschluss (60) eine im Bereich des offene Endes des Gehäuses (40) befestigte Ringscheibe (62) umfasst.

4. Vorrichtung nach einem der Ansprüche 1 bis 3, **dadurch gekennzeichnet, dass** das zur Verankerung der Dämpfungsvorrichtung (22) am Aggregat (10) vorgesehene erste Befestigungsmittel (82) ein in eine zugeordnete Bohrung des Aggregats (10) einpressbarer Stift (70) ist, der dem glockenförmigen Gehäuse (40) der Dämpfungsvorrichtung (22) zugeordnet ist.

5. Vorrichtung nach einem der Ansprüche 1 bis 4, **dadurch gekennzeichnet, dass** der Spreizkörper (92) sowie die Federenden (86, 87) der Bügelfeder (84) mit durchgehenden Ausnehmungen (96) versehen sind, durch die hindurch ein axial vom Gehäuse (40) abstehender Stift (34) ragt.

6. Vorrichtung nach einem der Ansprüche 1 bis 5, **dadurch gekennzeichnet, dass** der Dämpfungskörper (44) der Dämpfungsvorrichtung (22) entlang seiner Längsachse geschlitzt ist

7. Vorrichtung nach einem der Ansprüche 1 bis 6, **dadurch gekennzeichnet, dass** das Gehäuse (40) und/oder der Kern (56) und/oder der Dämpfungskörper (44) auf ihren einander zugewandten Flächen mit einer Oberflächenstruktur (72), beispielsweise einem Rändel, versehen sind.

8. Aggregat, insbesondere Hydraulikaggregat einer Antiblockierschutzbremsanlage mit einem Gehäuseblock (12) und mit an diesem Gehäuseblock (12) festgelegten Vorrichtungen (22) nach einem der Ansprüche 1 bis 9, **dadurch gekennzeichnet, dass** die Vorrichtungen (22) an einer gemeinsamen Außenseite dieses Aggregats (10) festgelegt sind.

9. Aggregat nach Anspruch 8, **dadurch gekennzeichnet, dass** das Aggregat (10) mittelbar über eine Konsole (24) an einer Anbaufläche verankert ist, wobei die Konsole (24) als Winkelkonsole mit einer Grundplatte (26) und mit im wesentlichen senkrecht zur Grundplatte (26) abstehenden Haltern (28) zur Befestigung der Vorrichtungen (22) ausgestattet ist.

10. Aggregat nach Anspruch 9, **dadurch gekennzeichnet, dass** an der Grundplatte (26) zusätzlich wenigstens ein Schwingungen dämpfendes Abstützelement (36) in axialem Abstand zu den Vorrichtungen (22) angeordnet ist, auf dem das Aggregat (10) aufliegt, dass das Abstützelement (36) die Form eines Rings hat, der mittels einer nach außen offenen, umlaufenden Nut in einer durchgehenden Ausnehmung der Grundplatte (26) gehalten ist und dass das Aggregat (10) auf seiner der Grundplatte (26) zugewandten Seite einen Dom (38) aufweist, welcher diesen Ring zumindest teilweise durchdringt.

11. Aggregat nach.Anspruch 9 oder 10, **dadurch gekennzeichnet, dass** die Anbaufläche gebildet ist von einer mit Stehbolzen (100) bestückten Ankerplatte (98), dass die Konsole (24) den Stehbolzen (100) der Ankerplatte (98) zugeordnete Rastelemente (108) aufweist, wobei diese Rastelemente (108) in Bohrungen der Konsole (24) einsetzbare, Schwingungen dämpfende Dämpfungsringe (110) und in den Dämpfungsringen (110) formschlüssig gehaltene Haltebuchsen (116) umfassen und dass die Stehbolzen (100) und die Haltebuchsen (116) miteinander verrastbar sind.

## Claims

1. Device (22) for vibration-damping arrangement of a unit (10), in particular of a hydraulic unit of a brake system, on a mounting surface, in particular on a body of a motor vehicle,
having a substantially bell-shaped housing (40),
a damping body (44) which is arranged in the interior of the housing (40) and which is composed of vibration-damping material,
a core (56) which is mounted in the damping body (44) and
having fastening means (82) assigned to the core (56) and to the housing (40),
with the damping body (44) being of substantially pot-shaped design and having a contour which is stepped at least once in outer diameter and in inner diameter,
with the substantially closed end of the damping body (44) bearing against the closed end of the housing (40),
with the core (56) being matched to the contour of the damping body (44), likewise being stepped at least once in outer diameter,
with that end of the core (56) which has the greater outer diameter facing toward the closed end of the housing (40), and
with the housing (40) being provided, on its open side, with a closure (60) against which bears a shoulder (54) which is generated by the stepped contour of the damping body (44),
**characterized**
**in that** the second fastening means (82), which is provided for anchoring the unit (10) on the mounting surface, of the device (22) is a U-shaped spring (84) which is bent into an open loop and which has two spring ends (86, 87) which can be preloaded against one another,
with one of the spring ends (86) being anchored on the device (22) and with the second spring end (87) being movable relative to said first spring end (86), and
with a spreading body (92) which is captively held on the device (22) being movably arranged between the two spring ends (86, 87), which spreading body (92), in its basic position, spreads the spring ends (86, 87) apart.

2. Device according to Claim 1, **characterized in that** the closure (60) is formed by a flanged portion of the housing (40).

3. Device according to Claim 1, **characterized in that** the closure (60) comprises an annular disc (62) which is fastened in the region of the open end of the housing (40).

4. Device according to one of Claims 1 to 3, **characterized in that** the first fastening means (82), which is provided for anchoring the damping device (22) on the unit (10), is a pin (70) which can be pressed into an associated bore of the unit (10), which pin (70) is assigned to the bell-shaped housing (40) of the damping device (22).

5. Device according to one of Claims 1 to 4, **characterized in that** the spreading body (92) and the spring ends (86, 87) of the U-shaped spring (84) are provided with through-recesses (96) through which extends a pin (34) which projects axially from the housing (40).

6. Device according to one of Claims 1 to 5, **characterized in that** the damping body (44) of the damping device (22) is slotted along its longitudinal axis.

7. Device according to one of Claims 1 to 6, **characterized in that** the housing (40) and/or the core (56) and/or the damping body (44) are provided, on their surfaces facing towards one another, with a surface structure (72), for example a knurling.

8. Unit, in particular hydraulic unit of an anti-lock braking system, having a housing block (12) and having devices according to one of Claims 1 to 9 fixed to said housing block (12), **characterized in that** the devices (22) are fixed to a common outer side of said unit (10).

9. Unit according to Claim 8, **characterized in that** the unit (10) is anchored indirectly via a bracket (24) on a mounting surface, with the bracket (24), as an angle bracket, being equipped with a base plate (26) and with retainers (28), which project substantially perpendicularly with respect to the base plate (26), for fastening the devices (22).

10. Unit according to Claim 9, **characterized in that** at least one vibration-damping support element (36) is additionally arranged on the base plate (26) at an axial distance from the devices (22), on which support element (36) the unit (10) rests, **in that** the support element (36) has the shape of a ring which is held by means of an outwardly open encircling groove in a through-recess of the base plate (26), and **in that** the unit (10) has, on its side facing toward the base plate (26), a peg (38) which at least partially extends through said ring.

11. Unit according to Claim 9 or 10, **characterized in that** the mounting surface is formed by an anchor plate (98) which is equipped with stud bolts (100), **in that** the bracket (24) has latching elements (108) assigned to the stud bolts (100) of the anchor plate (98), with said latching elements (108) comprising vibration-damping damping rings (110), which can be inserted in bores of the bracket (24), and retaining sleeves (116) which are held in a positively locking manner in the damping rings (110), and **in that** the stud bolts (100) and the retaining sleeves (116) can be latched to one another.

## Revendications

1. Dispositif (22) pour un agencement amortissant les vibrations d'une unité (10), en particulier d'une unité hydraulique d'un système de freinage, sur une surface de montage, en particulier une carrosserie d'un véhicule automobile,
comprenant un boîtier essentiellement en forme de cloche (40),
un corps d'amortissement (44) disposé à l'intérieur du boîtier (40), en un matériau amortissant les vibrations,
un noyau (56) monté dans le corps d'amortissement (44) et
des moyens de fixation (82) associés au noyau (56) et au boîtier (40),
le corps d'amortissement (44) étant réalisé essentiellement en forme de pot et présentant un contour dont le diamètre extérieur ainsi que le diamètre intérieur sont rentrés au moins une fois,
l'extrémité essentiellement fermée du corps d'amortissement (44) s'appliquant contre l'extrémité fermée du boîtier (40),
le noyau (56) étant adapté au contour du corps d'amortissement (44), ayant également un diamètre extérieur au moins une fois rentré,
l'extrémité de plus grand diamètre extérieur du noyau (56) étant tournée vers l'extrémité fermée du boîtier (40), et
le boîtier (40) étant pourvu, sur son côté ouvert, d'une fermeture (60), contre laquelle s'applique un épaulement (54) résultant du contour en retrait du corps d'amortissement (44),
**caractérisé en ce que**
le deuxième moyen de fixation (82) du dispositif (22) prévu pour l'ancrage de l'unité (10) sur la surface de montage est un ressort en étrier (84) cintré vers une boucle ouverte, avec deux extrémités de ressort (86, 87) pouvant être précontraintes l'une contre l'autre,
l'une des extrémités du ressort (86) étant ancrée au dispositif (22) et la deuxième extrémité du ressort (87) étant relativement mobile par rapport à cette première extrémité de ressort (86), et
entre les deux extrémités de ressort (86, 87) étant disposé, de manière déplaçable, un corps d'écartement (92) maintenu de manière imperdable sur le dispositif (22), lequel écarte les extrémités du ressort (86, 87) dans sa position de base.

2. Dispositif selon la revendication 1, **caractérisé en ce que** la fermeture (60) est formée par un rebord du boîtier (40).

3. Dispositif selon la revendication 1, **caractérisé en ce que** la fermeture (60) présente une rondelle annulaire (62) fixée dans la région de l'extrémité ouverte du boîtier (40).

4. Dispositif selon l'une quelconque des revendications 1 à 3, **caractérisé en ce que** le premier moyen de fixation (82) prévu sur l'unité (10) pour l'ancrage du dispositif d'amortissement (22) est une goupille (70) pouvant être pressée dans un alésage associé de l'unité (10), qui est associée au boîtier en forme de cloche (40) du dispositif d'amortissement (22).

5. Dispositif selon l'une quelconque des revendications 1 à 4, **caractérisé en ce que** le corps d'écartement (92) ainsi que les extrémités de ressort (86, 87) du ressort en étrier (84) sont pourvus d'évidements traversants (96), à travers lesquels pénètre une goupille (34) saillant axialement depuis le boîtier (40).

6. Dispositif selon l'une quelconque des revendications 1 à 5, **caractérisé en ce que** le corps d'amortissement (44) du dispositif d'amortissement (22) est fendu le long de son axe longitudinal.

7. Dispositif selon l'une quelconque des revendications 1 à 6, **caractérisé en ce que** le boîtier (40) et/ou le noyau (56) et/ou le corps d'amortissement (44) sont pourvus sur l'une de leurs surfaces tournées l'une vers l'autre d'une structure de surface (72), par exemple d'un moletage.

8. Unité, notamment unité hydraulique d'une installation de freinage à antiblocage des roues, comprenant un bloc boîtier (12) et des dispositifs (22) fixés sur ce bloc boîtier (12), selon l'une quelconque des revendications 1 à 9, **caractérisée en ce que** les dispositifs (22) sont fixés sur un côté extérieur commun de cette unité (10).

9. Unité selon la revendication 8, **caractérisée en ce que** l'unité (10) est ancrée de manière indirecte par le biais d'une console (24) sur une surface de montage, la console (24) étant munie, en tant que console coudée, d'une plaque de base (26) et de supports (28) saillant essentiellement perpendiculairement à la plaque de base (26) pour la fixation des dispositifs (22).

10. Unité selon la revendication 9, **caractérisée en ce qu'**en outre au moins un élément de support (36) amortissant les vibrations est disposé sur la plaque de base (26) à distance axiale des dispositifs (22), sur lequel repose l'unité (10), **en ce que** l'élément de support (36) a la forme d'une bague, qui est maintenue au moyen d'une rainure périphérique ouverte vers l'extérieur dans un évidement traversant de la plaque de base (26), et **en ce que** l'unité (10) présente, sur son côté tourné vers la plaque de base (26), un mandrin (38) qui traverse cette bague au moins en partie.

11. Unité selon la revendication 9 ou 10, **caractérisée en ce que** la surface de montage est formée par une plaque d'ancrage (98) munie de boulons filetés (100), **en ce que** la console (24) présente des éléments d'encliquetage (108) associés aux boulons filetés (100) de la plaque d'ancrage (98), ces éléments d'encliquetage (108) comprenant des bagues d'amortissement (110) amortissant les vibrations, pouvant être insérées dans des alésages de la console (24), et des douilles de retenue (116) maintenues par engagement par correspondance géométrique dans les bagues d'amortissement (110), et **en ce que** les boulons filetés (100) et les douilles de retenue (116) peuvent être encliquetés les uns dans les autres.
